# EUROPÄISCHE PATENTSCHRIFT

(11) **EP 2 883 635 B1**
(45) Veröffentlichungstag und Bekanntmachung des Hinweises auf die Patenterteilung: **09.08.2017**
(21) Anmeldenummer: 14197450.1
(22) Anmeldetag: 11.12.2014
(51) Int. Cl.: B23B 13/08, B23B 13/12

(54) **Auswuchtvorrichtung und Verfahren zum Auswuchten für ein Stangenlademagazin**
Balancing device and method of balancing for a bar loading cartridge
Dispositif d'équilibrage et méthode d'équilibrage pour un magasin de stockage de tiges

(30) Priorität: 13.12.2013 DE 102013020597
(43) Veröffentlichungstag der Anmeldung: 17.06.2015
(73) Patentinhaber: FMB Maschinenbaugesellschaft mbH & CO. KG, 97906 Faulbach (DE)
(72) Erfinder: Löffler, Kai, 63906 Erlenbach am Main (DE); Wichtlhuber, Helmut, 63897 Miltenberg (DE)
(74) Vertreter: Blumbach Zinngrebe

(56) Entgegenhaltungen:
- DE-A1-102004 058 286
- FR-A1- 2 273 198

## Beschreibung

Die vorliegende Erfindung betrifft eine Auswuchtvorrichtung zur Integration in ein Stangenlademagazin gemäss dem Oberbegriff des Anspruchs 1, sowie ein entsprechendes Auswuchtverfahren gemäß dem Oberbegriff des Anspruchs 9. Eine solche Auswuchtvorrichtung und ein solches Verfahren zum Auswuchten sind aus dem Dokument FR2273198A1 bekannt. Drehautomaten zur spangebenden Bearbeitung von stangenförmigem Halbzeug, das im Folgenden als Materialstangen bezeichnet wird, sind grundsätzlich bekannt und umfassen üblicherweise einen feststehenden oder verfahrbaren Spindelstock, in dem eine oder mehrere durch eine Antriebseinheit angetriebene Spindel/-n entlang einer z-Achse gelagert sind, welche sich entlang der Einführ- bzw. Beförderungsrichtung der Materialstangen erstreckt. In dem Prozessraum des Drehautomaten wird die in der Spindel des Drehautomaten eingespannte Materialstange mit einem Werkzeug bearbeitet. Dazu wird die Materialstange üblicherweise von der Spindelstockrückseite des Drehautomaten in dessen als Hohlwelle ausgebildete drehbare Spindel eingeführt und in dieser zur Bearbeitung mit einem Spannmittel festgespannt.

Stangenlademagazine, welche auch als Lademagazine oder als Stangenlader bezeichnet werden, sind desgleichen grundsätzlich bekannt und ermöglichen die Führung von Materialstangen an diesen Drehautomaten. Ein an einem Drehautomaten bereitgestelltes Stangenlademagazin muss die Materialstange somit während des gesamten Bearbeitungsvorganges möglichst präzise führen, um Vibrationen sowie Schwingungen an dem Drehautomaten und dem Stangenlademagazin zu vermeiden.

Bei der Vermeidung von Schwingungen bzw. Vibrationen kommt vor allem der Lagerung und Führung der Materialstange in dem Stangenlademagazin eine besondere Bedeutung zu, wobei verschiedene Anforderungen hinsichtlich der Dimensionen und der Geometrien der Materialstangen zu berücksichtigen sind. So weisen die Materialstangen in der Regel Längen von bis zu 6m und Durchmesser zwischen 1mm bis 100mm auf. Des Weiteren können die Materialstangen verschiedenste Querschnittsprofile aufweisen, wobei zwischen symmetrischen und unsymmetrischen Querschnittsprofilen zu unterscheiden ist.

Ferner muss die Lagerung und Führung der Materialstangen in dem Stangenlademagazin verschiedenste Anforderungen gewährleisten, um einen wirtschaftlichen und produktiven Fertigungsprozess zu ermöglichen. Diesbezüglich sind häufig auch hohe Bearbeitungsdrehzahlen der drehend zu bearbeitenden Materialstangen von bis 15000 Umdrehungen pro Minute, als auch deren Ausrichtung in der Drehspindel des Drehautomaten mit einzubeziehen. So kommt für drehend zu bearbeitende Materialstangen eine zentrische oder auch eine exzentrische Einspannung in der Drehspindel des Drehautomaten in Betracht, weshalb Unwuchten aufgrund einer ungleichen Massenverteilung um die Drehachse, um welche die Materialstange bei der Drehbearbeitung rotiert wird, auftreten können und weshalb hohe Anforderung von der Führung der Stangenlademagazine erfüllt werden müssen, um die erforderlichen Fertigungstoleranzen einhalten zu können.

Aus der DE 10 2011 015 578 A1 sind z.B. Lagerungs- und Führungseinrichtungen bekannt, welche in dem Stangenlademagazin entlang der z-Achse verfahrbar und zur Lagerung und Führung der Materialstangen z.B. mit Buchsen ausgestattet sind, in die die Materialstangen in Längsrichtung und also entlang der z-Achse eingeführt werden können. Ferner muss eine hierfür geeignete Lagerungs- und Führungseinrichtung, d.h. um eine mit der Führungseinrichtung aufgenommene Materialstange bezüglich ihrer radialen Ausrichtung zu lagern und entlang ihrer Längsrichtung zu führen, ferner eine Rotation der Materialstange ermöglichen. Eine solche Lagerungs- und Führungseinrichtung wird nachfolgend und in den Ansprüchen der Einfachheit halber als Führungseinrichtung definiert.

Bei der DE 10 2011 015 578 A1 sind die für eine solche Führungseinrichtung eingesetzten Buchsen hierzu innerhalb einer Buchseneinheit drehbar gelagert, wobei üblicherweise auch mehrere Buchseneinheiten beabstandet voneinander, insbesondere in gleichmäßigen Abständen voneinander, entlang der z-Achse positionierbar sind, um Schwingungen weitestgehend vermeiden zu können.

Neben den standardisierten Profilen wie Rund-, Vierkant- oder Sechskantprofilen bzw. Rohrprofilen, die ein um deren Längsausrichtung weitgehend symmetrisches Profil aufweisen, gibt es jedoch auch asymmetrische Profile, wie z.B. ein sogenanntes Schlossprofil. Bei dieser Art von Profilen ist bereits werksseitig über die gesamte Profillänge in Richtung der Längsachse eine häufig auch durchgehende Asymmetrie des Profilstangenquerschnitts in Bezug auf deren Längsausrichtung vorhanden.

So entsteht bei der spanenden Bearbeitung von rotierenden Materialstangen infolge der Rotation ungleichmäßig verteilter Massen in der Regel eine störende Unwucht. Verursacht wird diese Unwucht in einer mehr oder weniger hohen Ausprägung z.B. durch ungleichmäßige Materialeinlagerungen, ungenaue Herstellung oder Einspannung der Materialstangen oder eben auch gewollt unsymmetrische Profile, wie z.B. bei dem Schlossprofil. Insbesondere bei gewollt unsymmetrischen Profilen erfolgt die Drehbearbeitung in der Regel nicht im Flächenschwerpunkt des Profils, d.h. die Drehachse während der Drehbearbeitung ist exzentrisch zur Hauptträgheitsachse der Materialstange entlang deren Längsrichtung und eine hierbei bei Rotation auftretende Unwucht führt demzufolge zu Schwingungen. Aber auch bei herstellungstechnisch bedingten Ungenauigkeiten, z.B. bei ungleichmäßigen Materialeinlagerungen oder bei nicht absoluter Geradheit der Materialstange, sowie bei gegenüber der Hauptträgheitsachse der Materialstange entlang deren Längsrichtung ungenauer Einspannung der Materialstange führt eine hierbei bei Rotation auftretende Unwucht demzufolge, insbesondere bei höheren Drehzahlen, zu erheblichen Schwingungen.

Besonders störend sind solche Unwuchten insbesondere auch aufgrund der Ablängung von bei der Drehbearbeitung der Materialstangen fertig bearbeiteten Stücken, da infolge dieser Abarbeitung die Unwuchten der am Drehautomaten zu führenden Materialstangenlänge einer ständigen Änderung unterliegen. Ferner kann bei jeder Vorschubbewegung der Materialstange in Einführ- bzw. Beförderungsrichtung in dem Stangenlademagazin eine weitere, von der Vorschubbewegung abhängige Unwucht hinzukommen.

Die Patentschrift DD 245 934 A1 beschreibt zum Entgegenwirken einer Unwucht bei einem aus harten, spröden, technologisch schwer zu bearbeitenden Werkstoffen gefertigten Rotationskörper eine Ausführung mit Auswuchtgewicht und einer dazugehörigen Aussparung im Rotationskörper. Das Auswuchtgewicht wird dabei im Stillstand entlang einer Ringnut an beliebiger Stelle des Umfangs des Rotationskörpers platziert und anschließend mit einer Schraube verspannt. Eine solche Ausführung eignet sich folglich nicht für ein Auswuchten sich ständig ändernder Unwuchten, wie sie beim Führen von Materialstangen an einem Drehautomaten entstehen können.

Die DE 10 2012 216 867 A1 beschreibt zum Entgegenwirken einer Unwucht bei einem um eine Drehachse rotierenden Bauteil, auf welchem bei der Herstellung oder im Gebrauch eine Unwucht entsteht, eine Ausführung, gemäß welcher das Bauteil ein künstlich eingebrachtes sowie stationär fixiertes Auswuchtelement umfasst, das von dem Bauteil so hervorsteht, dass es bei andauernder Rotation um die Drehachse zum einzelnen Abtragen geeignet ist, wobei das Auswuchtelement an einer solchen Stelle angeordnet ist, dass es beim Abtragen zur Verringerung der Unwucht beiträgt. Auch eine solche Ausführung eignet sich folglich nicht für ein Auswuchten sich ständig ändernder Unwuchten, wie sie beim Führen von Materialstangen an einem Drehautomaten entstehen.

Die DE 10 2008 027 327 beschreibt eine Vorrichtung zum selbsttätigen Auswuchten eines sich drehenden Maschinenteils mit mindestens einer Unwuchtausgleichsscheibe, die mindestens einen konzentrisch zur Drehachse des Maschinenteils angeordneten ringförmigen Hohlraum aufweist. In diesem Hohlraum sind freibewegliche Ausgleichselemente angeordnet, die eine vorhandene Unwucht durch Einnahme einer Gegenlage ausgleichen und als Kugelrollen mit zwei symmetrisch abgeflachten Stirnseiten ausgebildet sind. Bei sich ständig ändernden Unwuchten, wie sie beim Führen von Materialstangen an einem Drehautomaten entstehen, besteht folglich die Gefahr eines sich aufschwingenden, instabilen Systems.

Die DD 270 136 A1 beschreibt eine Einrichtung zum Auswuchten eines rotierenden Systems, wie z.B. eine Servospurschreiberspindel mit aufgespannter Magnetspeicherplatte vor dem Aufzeichnen der Servospur, während der Rotation mittels mehreren, in einer mitlaufenden konzentrischen Ringkammer rollend beweglichen magnetischen Ausgleichsmassen. Hierbei können die rollend beweglichen Ausgleichsmassen während des Hochlaufens des Systems selbsttätig eine stets gleiche vordefinierte Anfangslage einnehmen. Daraufhin erzeugt eine Positioniereinrichtung ein örtlich begrenztes rotierendes Magnetfeld welches die Ausgleichsmassen nacheinander einmalig in eine vorberechnete Ausgleichslage bringt, woraufhin das Magnetfeld und die Positioniereinrichtung abgeschaltet wird. Auch eine solche Ausführung eignet sich folglich nicht für ein Auswuchten sich ständig ändernder Unwuchten, wie sie beim Führen von Materialstangen an einem Drehautomaten entstehen.

Eine Aufgabe der Erfindung ist es daher, einen Weg aufzuzeigen, mit welchem einer sich ständig ändernden Unwucht, wie sie beim Führen von Materialstangen, insbesondere auch während der Rotation und/oder Vorschubbewegung, an einem Drehautomaten mit damit verbundener Abarbeitung der Stangen entsteht, wirksam entgegengetreten werden kann, um hierdurch insbesondere den Automatisierungsgrad in Stangenlademagazinen weiter zu erhöhen und das Schwingungsverhalten solcher Stangenlademagazine infolge von Unwucht während des gesamten Fertigungsvorganges weiter zu verbessern.

Die Lösung der Aufgabe ist bereits durch Vorrichtungen und ein Verfahren mit den Merkmalen gemäß den unabhängigen Ansprüchen gegeben. Zweckmäßige Weiterbildungen sind Gegenstand der abhängigen Ansprüche.

Demgemäß ist für ein Stangenlademagazin zum Führen von Materialstangen an einem Drehautomaten, wobei durch die Längsachse einer in dem Stangenlademagazin geführten Materialstange eine z-Achse definiert ist, eine Auswuchtvorrichtung vorgesehen, die wenigstens eine zur Aufnahme einer Materialstange ausgeformte Führungseinrichtung besitzt, in welche eine Materialstange entlang der z-Achse einzuführen ist und welche der eingeführten und zur Bearbeitung an den Drehautomaten beförderten Materialstange eine Rotation ermöglicht, und wobei die Führungseinrichtung ausgebildet ist, dass eine solche Rotation der eingeführten Materialstange entweder um eine koaxial oder um eine versetzt zur z-Achse angeordnete Drehachse erfolgt. Die Auswuchtvorrichtung ist erfindungsgemäß gekennzeichnet durch wenigstens einen in Bezug auf die Führungseinrichtung wiederholt positionierbaren Massenkörper, der nach jeweils erfolgter Positionierung form- und/oder kraftschlüssig mit der Führungseinrichtung und/oder der Materialstange derart verbunden ist, dass dieser daraufhin bei Rotation der eingeführten Materialstange zusammen mit der Materialstange mit derselben Winkelgeschwindigkeit um die Drehachse rotiert. Die Auswuchtvorrichtung ist ferner erfindungsgemäß gekennzeichnet durch wenigstens eine Positioniereinrichtung, die ausgebildet ist, den wenigstens einen Massenkörper in Bezug auf die Führungseinrichtung erstmalig zu positionieren, während der Rotation eine erforderliche, durch Unwucht bedingte Neupositionierung zu erkennen und den Massenkörper unter Ansprechen auf eine als erforderlich erkannte Neupositionierung in Bezug auf die Führungseinrichtung jeweils wieder neu zu positionieren.

Die Erfindung schlägt hierzu ferner ein Stangenlademagazin mit einer solchen integrierten Auswuchtvorrichtung vor.

Die Erfindung schlägt ferner ein Verfahren zum Auswuchten von durch Rotation einer Materialstange erzeugter Unwucht vor, wobei die Materialstange in einem Stangenlademagazin zum Führen von Materialstangen an einem Drehautomaten geführt wird, wobei das erfindungsgemäße Verfahren folgende Schritte aufweist:
Die Materialstange wird entlang einer z-Achse, welche durch die Längsachse der Materialstange definiert wird, in wenigstens eine zur Aufnahme einer Materialstange ausgeformte Führungseinrichtung eingeführt, die einer eingeführten und zur Bearbeitung an den Drehautomaten beförderten Materialstange eine Rotation um eine Drehachse ermöglicht, die entweder koaxial oder versetzt zur z-Achse ist. Wenigstens ein Massenkörper wird in Bezug auf die Führungseinrichtung positioniert, und nach erfolgter Positionierung form- und/oder kraftschlüssig mit der Führungseinrichtung und/oder der Materialstange in Verbindung gebracht, so dass dieser daraufhin bei Rotation der eingeführten Materialstange zusammen mit der Materialstange mit derselben Winkelgeschwindigkeit um die Drehachse rotiert, und unter Ansprechen auf eine während der Rotation als erforderlich erkannte, durch Unwucht bedingte Neupositionierung, insbesondere bei Überschreiten eines diesbezüglich vordefinierten Grenzwertes, wird der Massenkörper jeweils wieder neu positioniert.

Ein wesentlicher Vorteil hierbei ist folglich, dass mit dem wenigstens einen in Bezug auf die Führungseinrichtung positionierbaren und anschließend mit der Führungseinrichtung und/oder der Materialstange form- und/oder kraftschlüssig verbundenen Massenkörper eine dynamische Einheit zum Entgegenwirken Unwucht bedingter Schwingungen bereitgestellt ist, die auf einfache Weise in das Stangenlademagazin integriert werden kann. Hierdurch kann auftretenden Fliehkräften, die infolge einer Unwucht der rotierenden Materialstange entstehen, durch entsprechende Anordnung bzw. Positionierung des wenigstens einen Massenkörpers effektiv entgegengewirkt werden, wobei nicht nur einer vor Beginn einer Rotation direkt ermittelbaren Unwucht effektiv entgegengetreten, insbesondere eliminiert werden kann sondern auch während des gesamten Bearbeitungsvorganges veränderten Unwuchten durch entsprechende Neupositionierung des wenigstens einen Massekörpers entgegengewirkt, insbesondere eliminiert werden kann.

Dies kann insbesondere auf Grundlage von Sensordaten, zweckmäßig unter Verwendung einer Regelung oder Steuerung erfolgen.

Gemäß zweckmäßigen Weiterbildungen kann die form- und/oder kraftschlüssige Verbindung mit der Führungseinrichtung und/oder der Materialstange insbesondere mechanisch, pneumatisch und/oder hydraulisch erfolgen. Ferner sind zweckmäßig wenigstens zwei, insbesondere wenigstens drei solcher positionierbarer Massenkörper vorgesehen. Der oder die Massenkörper können hierbei je nach spezifischer Ausführung und/oder Anforderung vorzugsweise in Bezug auf die Drehachse in Umfangsrichtung, in Radialrichtung und/oder in Axialrichtung positionierbar sein.

Ferner kann gemäß zweckmäßiger Weiterbildungen die Führungseinrichtung wenigstens eine um die Drehachse rotierbar gelagerte Buchse umfassen, in welche die Materialstange entlang der z-Achse einzuführen ist, oder einen durchgängigen oder aus Segmenten bestehenden Führungskanal, in welchem der Materialstange eine Rotation um die Drehachse ermöglicht ist.

Die Erfindung kann somit äußerst vielseitig und bei unterschiedlichsten Führungseinrichtungen eingesetzt werden und ist ferner nicht auf bestimmte Lademagazine oder Drehautomaten eingeschränkt, sondern kann in jeglichen Typen von Stangenlademagazinen zum Führen von mindestens einer Materialstange an Drehautomaten oder dergleichen Werkzeugmaschinen zur Anwendung kommen.

Weitere Merkmale und Vorteile der Erfindung ergeben sich aus der nachfolgenden Beschreibung einiger zweckmäßiger Ausgestaltungen unter Bezugnahme auf die beigefügten Zeichnungen. Hierbei zeigen:
- Fig. 1a: eine schematische Darstellung einer in wenigstens einer Führungseinrichtung gelagerten Materialstange;
- Fig. 1b: eine schematische Darstellung einer Buchse als Teil einer Führungseinrichtung nach Fig. 1a mit einer zentrisch gelagerten Materialstange;
- Fig. 1c: eine schematische Darstellung einer Buchse nach Fig. 1b mit einer exzentrisch gelagerten Materialstange;
- Fig. 2a: eine schematische Darstellung einer drehbar gelagerten Trägereinrichtung, welche eine Buchse zusammen mit zwei Massenkörpern aufnimmt, wobei die Massenkörper erstmalig positioniert sind;
- Fig. 2b: eine schematische Darstellung der drehbar gelagerten Trägereinrichtung nach Fig. 2a mit darin untergebrachter Buchse und zentrisch eingeführter Materialstange;
- Fig. 2c: eine schematische Darstellung der drehbar gelagerten Trägereinrichtung nach Fig. 2a mit darin untergebrachter Buchse und exzentrisch eingeführter Materialstange;
- Fig. 2d: eine schematische Darstellung der drehbar gelagerten Trägereinrichtung nach Fig. 2c mit neu positionierten Massenkörpern;
- Fig. 3a: eine schematische Schnittdarstellung entlang der Schnittachse AA gemäß Fig. 2d;
- Fig. 3b: eine zur Fig. 3a ähnliche Schnittdarstellung, jedoch mit entlang der Zuführrichtung getrennten Positionierungsbereichen für Massenkörper;
- Fig. 4a: eine schematische Gesamtübersicht eines Stangenlademagazins mit Auswuchtvorrichtung; und
- Fig. 4b: eine schematische Prinzipskizze einer Auswuchtvorrichtung innerhalb eines Stangenlademagazins.

Nachfolgend werden einige zweckmäßiger Ausgestaltungen der Erfindung, insbesondere anhand einer Auswuchtvorrichtung für ein Stangenlademagazin zum Führen von Materialstangen an einem Drehautomaten, wobei durch die Längsachse einer in dem Stangenlademagazin geführten Materialstange eine z-Achse definiert ist, unter Bezugnahme auf die beigefügten Zeichnungen näher beschrieben, wobei die Auswuchtvorrichtung wenigstens eine zur Aufnahme einer Materialstange ausgeformte Führungseinrichtung besitzt, in welche die Materialstange entlang der z-Achse einzuführen ist und welche einer eingeführten und zur Bearbeitung an den Drehautomaten beförderten Materialstange eine Rotation ermöglicht, und wobei die Führungseinrichtung ausgebildet ist, dass eine solche Rotation der eingeführten Materialstange entweder um eine koaxial oder um eine versetzt zur z-Achse angeordnete Drehachse erfolgt, wobei die Auswuchtvorrichtung wenigstens einen in Bezug auf die Führungseinrichtung wiederholt positionierbaren Massenkörper umfasst, der nach jeweils erfolgter Positionierung form- und/oder kraftschlüssig mit der Führungseinrichtung und/oder der Materialstange in Verbindung steht, so dass dieser daraufhin bei Rotation einer eingeführten Materialstange zusammen mit der Materialstange mit derselben Winkelgeschwindigkeit um die Drehachse rotiert, und wenigstens eine Positioniereinrichtung umfasst, die ausgebildet ist, den wenigstens einen Massenkörper in Bezug auf die Führungseinrichtung erstmalig zu positionieren, während der Rotation eine erforderliche, durch Unwucht bedingte Neupositionierung zu erkennen und den Massenkörper unter Ansprechen auf eine als erforderlich erkannte Neupositionierung in Bezug auf die wenigstens eine Führungseinrichtung jeweils wieder neu zu positionieren.

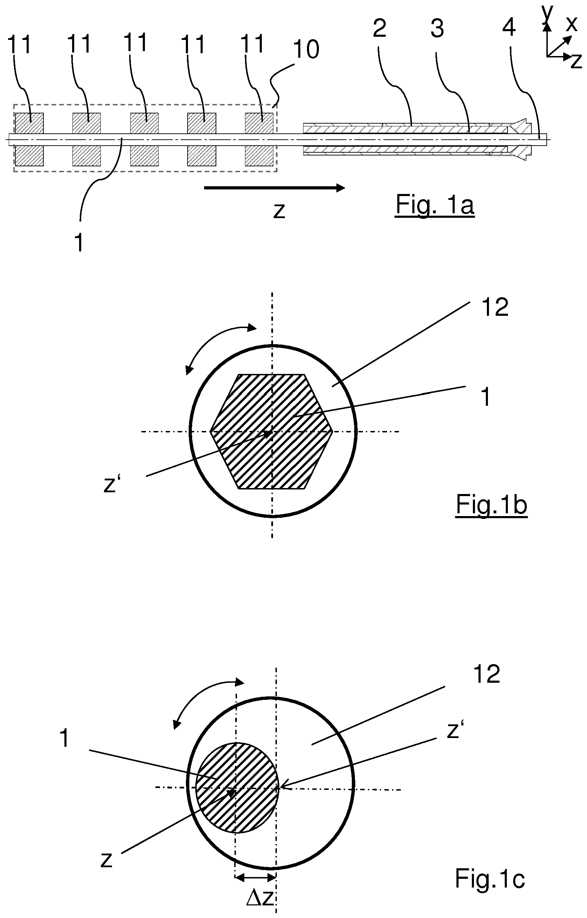

Fig. 1a zeigt hierzu in einer schematischen Darstellung eine Materialstange 1, die entlang einer durch die Längsachse der Materialstange definierten z-Achse in Richtung des Pfeils gemäß Fig. 1a zunächst in wenigstens einer Führungseinrichtung 11 eines Stangenlademagazins, dargestellt in Fig. 1a sind fünf Führungseinrichtungen 11, eingeführt und gelagert, und nach Durchlaufen durch diese Führungseinrichtungen 11 rückseitig in die Hohlspindel 2 eines Drehautomaten geführt ist. Wie bei Fig. 1a angedeutet, sind diese Führungseinrichtungen 11 Teil einer Auswuchtvorrichtung 10 für ein Stangenlademagazin zum Führen von Materialstangen an einem Drehautomaten, wobei aus Gründen der Vereinfachung das Stangenlademagazin als solches und der Drehautomat in Fig. 1a nicht gezeigt sind.

Ein in den Prozessraum des Drehautomaten hineinragender Überstand 4 der Materialstange 1 wird im Anschluss an die Bearbeitung abgetrennt und die Materialstange entlang der z-Achse in Richtung des Pfeils gemäß Fig. 1a nachgeschoben, wobei eine Fixierung in der Hohlspindel 2 durch ein Spannmittel 3 erfolgt.

Fig. 1b zeigt schematisch eine rotierbar gelagerte Buchse 12, welche Teil einer Führungseinrichtung 11 gemäß Fig. 1a sein kann. In der Buchse 12 ist zentrisch zur Drehachse z' der Buchse 12 eine Profilausnehmung ausgeformt, z.B. zur Aufnahme einer Materialstange mit einem Sechskantprofil. In der Profilausnehmung der Buchse 12 ist ferner eine mit einer Schraffur kenntlich gemachte und entsprechend mit einem Sechskantprofil profilierte Materialstange 1 zentrisch gelagert und geführt. In einem solchen Fall z.B. sind somit die z-Achse bzw. Längsachse der Materialstange 1 und die Drehachse z' in der Regel koaxial zueinander ausgerichtet.

Fig. 1c zeigt ähnlich zur Fig. 1b schematisch eine rotierbar gelagerte Buchse 12, welche Teil einer Führungseinrichtung 11 gemäß Fig. 1a sein kann. Die bei Fig. 1c dargestellte Buchse 12 besitzt jedoch eine exzentrisch zur Drehachse z' der Buchse 1 ausgeformte Profilausnehmung, z.B. zur Aufnahme einer Materialstange mit einem Rundprofil. In der Profilausnehmung der Buchse 12 ist ferner eine mit einer Schraffur kenntlich gemachte Materialstange 1 mit einem entsprechenden Rundprofil exzentrisch gelagert und geführt. In einem solchen Fall z.B. sind somit die z-Achse bzw. Längsachse der Materialstange 1 und die Drehachse z' versetzt zueinander, insbesondere parallel zueinander ausgerichtet, z.B. um den Versatz Δz. Bei Rotation um die Drehachse z' der Buchse 12 einschließlich der darin aufgenommenen Materialstange 1 gemäß Fig. 1c entsteht folglich aufgrund der ungleichmäßig verteilten Massen der Buchse 12 und der Materialstange 1 in der Regel eine störende Unwucht.

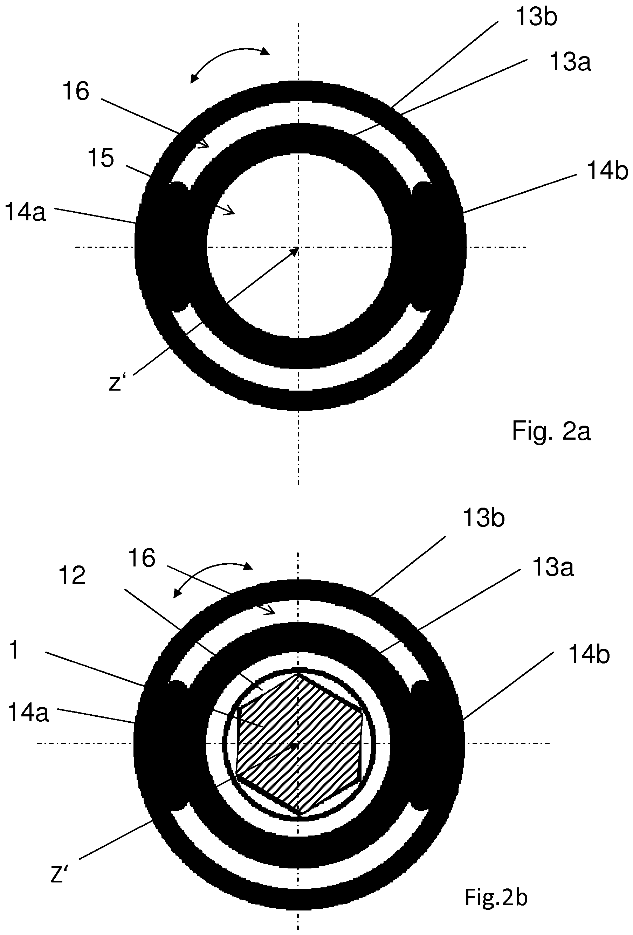

Zum Entgegenwirken von durch eine solche oder ähnliche Unwucht bei Rotation erzeugten Schwingungen besitzt die Auswuchtvorrichtung gemäß der Erfindung wenigstens einen in Bezug auf die Führungseinrichtung wiederholt positionierbaren Massenkörper, der nach jeweils erfolgter Positionierung form- und/oder kraftschlüssig mit der Führungseinrichtung und/oder der Materialstange in Verbindung steht, so dass dieser daraufhin bei Rotation der eingeführten Materialstange zusammen mit der Materialstange mit derselben Winkelgeschwindigkeit um die Drehachse rotiert. Die Figuren 2a bis 2d zeigen hierzu in schematischen Querschnittsansichten beispielhafter Ausführungen, gemäß welcher eine Trägereinrichtung zur Aufnahme einer Buchse 12 sowie wenigstens eines positionierbaren Massenkörpers vorgesehen ist. Demgemäß ist die Trägereinrichtung einer solchen Buchse 12 zweckmäßiger Weise im Wesentlichen zylinderartig ausgebildet, in praktischer Ausführung zur drehbaren Lagerung um die Drehachse z' in ein Kugellager (nicht dargestellt) eingesetzt und bildet im Innern der Trägereinrichtung koaxial zur Drehachse z' einen Aufnahmeraum 15 für die Buchse 12 aus. Radial beabstandet von diesem Aufnahmeraum 15 bildet die Trägereinrichtung z.B. einen Positionierungsbereich 16, im gezeigten Beispiel einen Positionierungsraum, für einen oder mehrere Massenkörper 14a, 14b aus, in welchem dieser bzw. diese zum Einen zum wiederholten Positionieren als auch zum form- und/oder kraftschlüssigen Verbinden mit der Führungseinrichtung und/oder der Materialstange gefangen sind. Hierzu kann die Trägereinrichtung z.B. zweckmäßig in Art einer Hülse ausgebildet sein, die zwei koaxial zueinander, jedoch radial voneinander beabstandet angeordnete Gehäuseschalen 13a und 13b besitzt, zwischen denen der Positionierungsbereich 16 in Art eines -raums gebildet ist, wobei im Innern der inneren Gehäuseschale 13a der Aufnahmeraum 15 (Fig. 2a) für die Buchse und die äußere Gehäuseschale 13b im nicht dargestellten Kugellager eingesetzt ist.

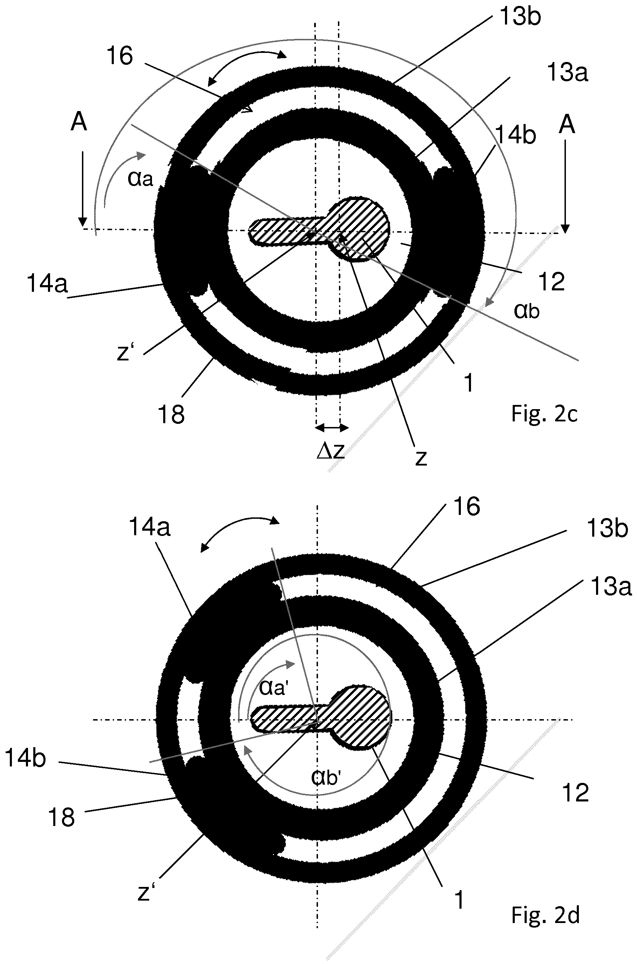

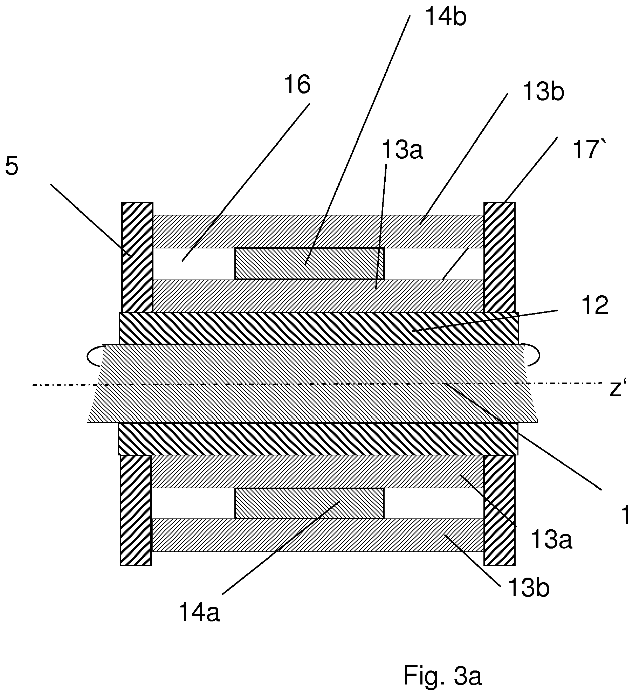

Zum wiederholten Positionieren als auch zum form- und/oder kraftschlüssigen Verbinden mit der Führungseinrichtung und/oder der Materialstange kann z.B. der Massenkörper 14a gemäß Fig. 2a dauerhaft fest mit der inneren Gehäuseschale 13a und der Massenkörper 14b dauerhaft fest mit der äußeren Gehäuseschale 13b verbunden sein, wobei die Gehäuseschalen 13a und 13b relativ zueinander verdrehbar und miteinander fixierbar sind. Zusätzlich kann die innere Gehäuseschale 13a relativ zum Aufnahmeraum 15 für die Buchse bzw. zur in den Aufnahmeraum 15 eingesetzten Buchse verdrehbar und mit diesem oder dieser fixierbar sein, beispielsweise mittels eines die Trägereinrichtung und die Buchse axial einspannenden Gestells 5, wie bei Fig. 3a, welche einen Schnitt entlang der Linie A-A der Fig. 2c zeigt, angedeutet.

Bei einer, eine solche Trägereinrichtung, Buchse und axial einspannenden Gestells integrierenden Ausführungsform des erfindungsgemäßen gegenstandes werden im Falle von zwei Massenkörpern 14a und 14b die Gehäuseschalen 13a und 13b zunächst z.B. relativ zueinander sowie zum Aufnahmeraum 15 oder einer darin bereits eingesetzten Buchse zweckmäßig derart zum erstmaligen Positionieren verdreht und anschließend fixiert, dass die Massenkörper 14a und 14b einander gegenüberliegend angeordnet sind, wie der Fig. 2a zu entnehmen. Durch eine solche zur Drehachse z' symmetrische Anordnung der beiden Massenkörper 14a und 14b heben sich zunächst die jeweils von einem Massenkörper 14a oder 14b bei Rotation herrührenden Unwuchten gegenseitig auf, so dass eine neutrale Ausgangsposition eingenommen ist.

Die Figur 2b zeigt in einer schematischen Querschnittsansicht eine solche neutrale Ausgangsposition mit einer in den Aufnahmeraum 15 für die Buchse eingesetzten Buchse 12 mit einer ausgeformten Profilausnehmung, in welche eine entsprechend profilierte Materialstange 1 eingesetzt ist. Da bei einer Sechskantprofilierung in der Regel keine oder lediglich eine geringe Unwucht vorhanden ist, können die Massenkörper 14a oder 14b häufig in der neutralen Ausgangsposition verbleiben oder müssen lediglich geringfügig korrigierend neu positioniert werden.

Die Figur 2c zeigt in einer zur Fig. 2b ähnlichen schematischen Querschnittsansicht eine solche neutrale Ausgangsposition mit einer in den Aufnahmeraum 15 für die Buchse eingesetzten Buchse 12 mit einer exzentrisch zur Drehachse z' ausgeformten Profilausnehmung, in welche eine entsprechend profilierte Materialstange 1 eingesetzt ist. Wie der Fig. 2c zu entnehmen, erstreckt sich aufgrund des Profils, beispielsweise des dargestellten Schlossprofils, die durch den Flächenschwerpunkt verlaufende Hauptträgheitsachse der Materialstange entlang deren Längsrichtung und also die Längsachse z des Profils versetzt zur Drehachse z', welches in der Fig. 2c mit Δz kenntlich gemacht ist. Da in einem solchen Fall, ähnlich wie z.B. auch bei ungleichmäßigen Materialeinlagerungen oder bei nicht absoluter Geradheit der Materialstange, bei Rotation um die Drehachse z' folglich eine Unwucht vorhanden ist, welche zu Schwingungen führt, dürfen die Massenkörper 14a und 14b in einer neutralen Ausgangsposition in Folge einer ersten Positionierung nicht verbleiben, sondern müssen erneut positioniert werden. Hierbei werden, z.B. ausgehend von einer Winkellage "αa" des Massenkörpers 14a und einer Winkellage "αb" des Massenkörpers 14b in Bezug auf die Buchse 12 und/oder Trägereinrichtung 13a, 13b gemäß Fig. 2c, der Massenkörper 14a in einer Winkellage "αa"' und der Massenkörpers 14b in einer Winkellage "αb"' in Bezug auf die Buchse 12 und/oder Trägereinrichtung 13a, 13b gemäß Fig. 2d neu positioniert, in welchen Winkellagen einer von der Materialstange 1 herrührende Unwucht effektiv entgegengewirkt wird, insbesondere sich die jeweils von den Massenkörpern 14a oder 14b und der Materialstange 1 bei Rotation herrührenden Unwuchten zweckmäßig gegenseitig aufheben.

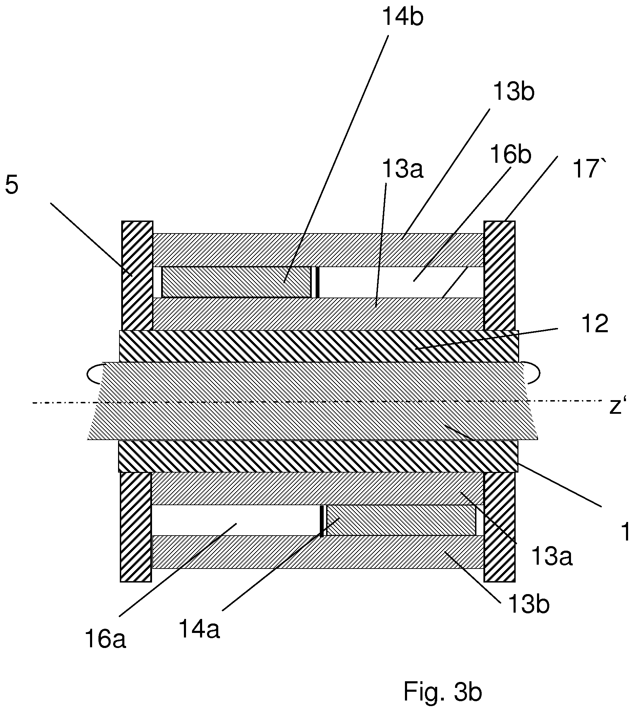

Zeigt, wie zuvor beschrieben, die Figur 3a einen Schnitt entlang der Linie A-A der Fig. 2c mit einem gemeinsamen Positionierungsbereich 16 für die Massenkörper 14a und 14b einer Führungseinrichtung, zeigt die Fig. 3b eine zwar ähnliche Schnittdarstellung wie die Fig. 3a, jedoch mit axial entlang der Längsachse separat bzw. voneinander getrennt angeordneten Positionierungsbereichen 16a und 16b für die Massenkörper 14a bzw. 14b der Führungseinrichtung. Es ist ersichtlich, dass bei jeweils separat bzw. voneinander getrennt angeordneten Positionierungsbereichen für mehrere Massenkörper anstelle eines gemeinsamen Positionierungsbereichs für mehrere Massenkörper Freiraum zur Neupositionierung jedes Massenkörpers erhöht werden kann. Andererseits kann, unabhängig von einem oder mehreren Positionierungsbereichen, für jeden Massenkörper eine Anfangs- und/oder maximale Endlagenposition vorgegeben werden, z.B. durch entsprechende Anordnung von Stegen oder anderen Freiraumbegrenzungen innerhalb eines Positionierungsbereichs. Je nach Art der Positionierungseinrichtung können diese Begrenzungen den Positionierungsbereich auch wiederum komplett unterteilen, so dass z.B. auch pneumatisch durch entsprechenden unterschiedlichen Druckaufbau innerhalb eines Positionierungsbereichs und beiderseits eines Massenkörpers eine gewünschte Neupositionierung einstellbar ist. Auch kann je nach Art der Positionierungseinrichtung ein Massenkörper an einer solchen vorgegebenen Anfangs- und/oder maximale Endlagenposition einseitig abgestützt werden, beispielsweise mittels einer Feder.

Ferner muss sich im Rahmen der Erfindung ein Positionierungsbereich für einen oder mehrere Massenkörper nicht zwingend in Umfangsrichtung zur Drechachse z', wie bei den Fig. 2a bis 2d gezeigt, erstrecken, sondern kann sich beispielsweise auch in radialer Richtung zur Drechachse z', in axialer Richtung zur Drehachse z' oder schräg zur Drechachse z', d.h. in einem Winkel größer oder kleiner 90°Grad zur Drehachse erstrecken. Auch hierüber lassen sich durch Neupositionierung eines oder mehrerer Massenkörper gewünschte Unwuchten über den oder die Massenkörper einstellen, welche einer ansonsten vorhandenen Unwucht effektiv entgegenwirken.

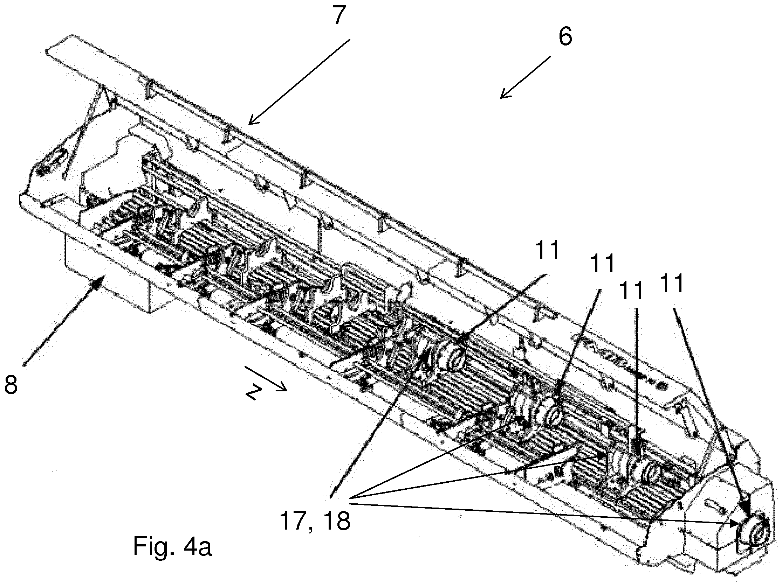

Die Fig. 4a zeigt ein Stangenlademagazin 6, in welches eine Materialstange 1 (nicht sichtbar) zur Lagerung und Führung an einem Drehautomaten entlang der z-Achse einzulegen ist. Das Stangenlademagazin 6 besitzt unter Anderem z.B. ein Gehäuse und eine Haube 7 zur Abdeckung. Ferner ist in das Stangenlademagazin 6 eine Auswuchtvorrichtung mit vier Führungseinrichtungen 11, in Bezug auf welche jeweils ein, bevorzugt mehrere Massenkörper (nicht sichtbar) wiederholt positionierbar sind, integriert. Zur Erfassung einer erforderlichen Positionierung und entsprechenden Positionierung der Massenkörper sind zweckmäßig an allen diesen Führungseinrichtungen 11 z.B. Sensoren 17, insbesondere zur Erfassung der Intensität von Schwingungen, z.B. durch Erfassung von Schwingungsamplituden, sowie Aktoren 18 zur Aktivierung der Positionierung angeordnet. Zur Ansteuerung der Aktoren unter Ansprechen auf eine erforderliche Neupositionierung anzeigende Sensorsignale umfasst die in ein Stangenlademagazin 6 gemäß Fig. 4a integrierte Auswuchtvorrichtung bevorzugt ferner eine entsprechend geeignete Regelung- oder Steuerungseinheit 8.

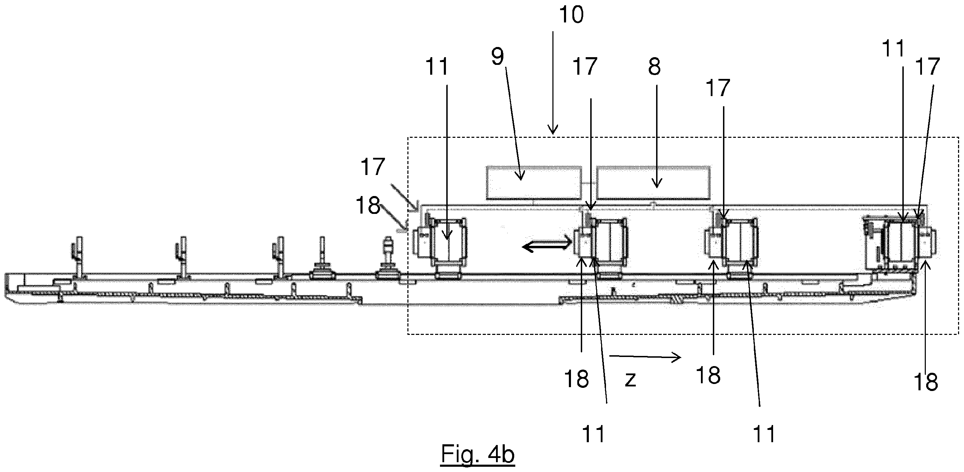

In der auf Fig. 4a basierenden Prinzipskizze der Fig. 4b, welche schematische eine solche in ein Stangenlademagazin 6 gemäß Fig. 4a integrierte Auswuchtvorrichtung 10 zeigt, ist ferner zu sehen, dass zumindest eine dieser Führungseinrichtungen 11, vorzugsweise alle Führungseinrichtungen 11, in beide Richtungen entlang der z-Achse, z.B. mittels eines Schlittens, verfahrbar ist/sind. Wird somit eine in den Figuren 4a und 4b nicht dargestellte Materialstange in den Führungseinrichtungen 11 gelagert und geführt, und ein bearbeiteter Überstand 4 (Fig. 1a) der Materialstange nach dem Bearbeitungsprozess in dem Prozessraum des Drehautomaten abgetrennt, wird die Materialstange anschließend zur weiteren Bearbeitung nachgeführt und die Materialstange während des Bearbeitungsprozesses folglich stetig kürzer, so dass eine solche, entlang der z-Achse verfahrbare Führungseinrichtung 11 durch die Steuerung des Drehautomaten und/oder des Stangenlademagazins zweckmäßig ebenfalls entlang der z-Achse nachgeführt werden kann. Hierdurch ist ermöglich, dass eine solche Führungseinrichtung so lang als möglich weiterhin zur Führung der Materialstange dient.
Wie ferner der Fig. 4b zu entnehmen ist, kann je nach Art der Positionierungseinrichtung, beispielsweise im Falle von Aktoren 18, die eine Positionierung der Massekörper hydraulisch oder pneumatisch durchführen, der Regelung- oder Steuerungseinheit 8 noch eine Aktorversorgungseinheit 9 zugeordnet sein, mit welcher das Positionierungsmedium den Erfordernissen zur Positionierung entsprechend zugeführt wird.

Mit einer Auswuchtvorrichtung 10 gemäß Fig. 4b kann somit nach erfolgter erstmaliger Positionierung wenigstens eines Massenkörpers einer Führungseinrichtung 11 und anschließender form- und/oder kraftschlüssiger Verbindung mit der Führungseinrichtung 11 und/oder einer darin eingeführten Materialstange bei Rotation der eingeführten Materialstange auf einfache Weise mittels der Sensorik 17 eine Unwucht, insbesondere in Bezug auf eine jeweilige Führungseinrichtung erkannt werden. Die form- und/oder kraftschlüssige Verbindung kann je nach spezifischer Ausführung insbesondere mechanisch, pneumatisch und/oder hydraulisch erfolgen. Die hierzu von der Sensorik 17 der Regelungs- oder Steuerungseinheit 8 zugeführten Sensorsignale können zweckmäßig zunächst hinsichtlich des Überschreitens eines vordefinierten Grenzwertes in Bezug auf die Unwucht und/oder die hierdurch verursachten Schwingungen geprüft werden. Wird in Folge von der Regelungs- oder Steuerungseinheit 8 eine durch Unwucht bedingte Neupositionierung der Massenkörper erkannt, werden die Aktoren 18 zum Entgegenwirken dieser Unwucht bzw. der Schwingungen durch Neupositionierung der Massenkörper entsprechend angesteuert bzw. geregelt.

Je nach spezifischer Ausführung kann hierbei ein jeweiliger Massenkörper in Bezug auf die Führungseinrichtung 11 zwischen einem Nachschieben zur weiteren Beförderung einer Materialstange, gemäß Fig. 4b also mittels der Führungseinrichtung 19, und dem Beginn einer erneuten Rotation der Materialstange neu positioniert werden und/oder auch während der Rotation der Materialstange.

Gemäß vorstehender Beschreibung umfasst eine Ausführungsform einer Führungseinrichtung 11 somit in drehbar gelagerten, hülsenartigen Trägereinrichtungen eingesetzte Buchsen 12 in welcher eine Materialstange 1 form- und/oder kraftschlüssig aufgenommen werden kann, wobei die wiederholt positionierbaren Massenkörper an den Trägereinrichtungen angeordnet sind. Zumindest nach jeder erfolgten Positionierung der Massenkörper sind diese gleichermaßen form- und/oder kraftschlüssig mit einer jeweiligen Trägereinrichtung fest verbunden.
Bei Rotation der Materialstange drehen sich in diesem Fall folglich auch die Buchsen und hülsenartigen Trägereinrichtungen mit derselben Drehzahl bzw. Winkelgeschwindigkeit. Die zum Entgegenwirken einer Unwucht eingesetzten Massenkörper befinden sich dabei auf einer Kreisbahn, die senkrecht zur Drehachse angeordnet ist.

Mit Beginn des Bearbeitungsprozesses werden die Massenkörper dann zunächst erstmalig, insbesondere derart positioniert, dass durch die Massenkörper selbst keine Unwucht erzeugt wird und/oder, dass anhand vorgebebener Profildaten der Materialstange und/oder Einspanndaten der Materialstange in der Buchse, insbesondere betreffend eine Profilausnehmung der Buchse, eine Ausgangspositionierung für die Massenkörper vorgegebenen wird, in welcher sich die durch die Massenkörper, die Materialstange, die Buchse und die hülsenartige Trägereinrichtung jeweils bei Rotation einstellenden Unwuchten vorausberechnet bevorzugt zumindest im Wesentlichen ausgleichen.

Sofern während der Vorschubbewegung der Materialstange in Richtung der z-Achse und/oder während der Rotation um die durch die Führungseinrichtung vorgegebene Drehachse z' eine erstmalige oder veränderte Unwucht erkannt wird, die eine Neupositionierung der Massenkörper erforderlich macht, kann dieser Unwucht über eine Neupositionierung oder mehrere Neupositionierungen der Massenkörper in Bezug auf die Führungseinrichtung entgegengewirkt werden. Je nach spezifischer Ausführung können solche Neupositionierungen in Bezug auf die Führungseinrichtung z.B. durch Änderung der Winkellage der Massenkörper zur Drehachse z' relativ zur Winkellage einer in die Führungseinrichtung eingespannten Materialstange und/oder durch Änderung des radialen Abstandes zur Drehachse z erfolgen. Die Neuanordnung dieser Ausgleichsmassen ist während des Bearbeitungsvorganges in besonders bevorzugter Ausführung grundsätzlich jederzeit möglich. Erreicht wird dies, wie zuvor beschrieben, zweckmäßig auf Basis von an der Führungseinrichtung ermittelten Sensordaten und einer diese verarbeitenden Regelungs- oder Steuerungseinheit. Das Erfassen von jeweiligen Sensordaten kann hierbei kontinuierlich oder mit Eintritt eines bestimmten Ereignisses ausgelöst werden, z.B. durch zeitlich, örtlich, kräftemäßig oder auch andere definierte Ereignisse, wie z.B. ein vorgegebener Geschwindigkeitsgrenzwert oder eine vorgegebene Vorschubwegstrecke, und das Vorliegen eines bestimmten Ereignisses kann z.B. mittels Positionsgeber oder Weg-Zeitmessung, Kraftsensoren etc. ermittelt werden. Auch eine zur Erfassung von jeweiligen Sensordaten eingesetzte Sensorik kann je nach spezifischen Anforderungen unterschiedlich aufgebaut sein und also z.B. optisch oder mechanisch basierende Sensoren zur Erfassung einer Unwucht oder hierdurch verursachte Schwingung umfassen. Ergibt die Verarbeitung der Sensordaten, dass eine Neupositionierung der Massenkörper erforderlich ist, wird entsprechend die notwendige Lageverstellung bzw. Neupositionierung der Massenkörper durchgeführt.

Ferner kann im Rahmen der Erfindung eine Führung zur Positionierung der Massenkörper z.B. in Form von Nuten und einer hierzu geeigneten Formgebung der Massenkörper vorgesehen sein. Die Positionierung selbst kann jedoch auf vielfältige Weise erfolgen, z.B. mittels Feder-Masse-Systemen oder anderweitigen mechanischen Führungssystemen, einschließlich bei denen ein Massenkörper selbst mit Führungsmitteln oder Befestigungsmitteln, wie Haken, Ösen, Aussparrungen oder Ausformungen, versehen sein.
Die Positionierung kann jedoch auch pneumatisch oder hydraulisch durch einen entsprechend eingestellten Druckaufbau um einen Massenkörper herum oder im Falle von magnetischen Massekörpern auch durch entsprechende Steuerung/Regelung eines um die Führungseinrichtung herum angeordneten Magnetfeldes erfolgen.

So können zum berührungslosen Verschieben der Massekörper z.B. servoelektrische Antriebe, die ähnlich eines Schrittmotors Massen berührungslos durch Anlegen eines Magnetfeldes verschieben können, eingesetzt werden oder elektropneumatische Antriebe, die ein ähnliches Wirkprinzip wie ein pneumatischer Drehmotor aufweisen.

Bei pneumatischen und hydraulischen Antrieben kann das Erreichen einer gewünschten Winkellage und/oder eines gewünschten Abstandes der Massenkörper zur Drehachse zum Beispiel durch eine Kraft-Steuerung erfolgen, welche die Winkellage und/oder den Abstand der Massenkörper klar definiert. Bei servoelektrischen Antrieben kann die Winkellage und/oder der Abstand wie bei einem Schrittmotor sehr präzise definiert werden. Grundsätzlich ist auch eine Wegmesssteuerung ähnlich eines Drehgebers oder Glasmaßstabes denkbar, um die genaue Winkellage und/oder den Abstand der Massenkörper sicherzustellen.

Da auch die Massenkörper grundsätzlich in keinem bestimmten Längen - Breitenverhältnis zueinander stehen und in den Abmaßen innerhalb gewisser Grenzen frei gewählt werden können, ist die Erfindung folglich je nach spezifischen Anforderungen vielseitig adaptierbar.

Die Erfindung ermöglicht somit, dass die gezielte Anordnung von Massenkörper innerhalb eines Stangenlademagazins bereits vor Beginn eines Fertigungsprozesses erfolgen kann und auch während des Betriebs automatisch, insbesondere auch in Abhängigkeit vom Vorschub nachgeregelt werden kann. Infolgedessen ermöglicht die Erfindung im Vergleich zum Stand der Technik, das automatisierte Nachstellen bzw. Einstellen von Massenkörper als Ausgleichsgewichte zum Ausgleichen von unerwünschten Unwuchten während des gesamten Fertigungsprozesses. In der Folge werden unerwünschte Schwingungen vermieden und höhere Drehzahlen bei gleichbleibender Fertigungsqualität gewährleistet.

Zusammenfassend werden folglich gemäß der Erfindung dynamisch und individuell positionierbare Massenkörper bzw. -einheiten für den Ausgleich der Schwingungen von rotierenden Materialstangen innerhalb eines Stangenlademagazins integriert, so dass die auftretenden Fliehkräfte, welche durch die Unwucht rotierender Materialstangen hervorgerufen werden, durch entsprechende Anordnung der Massenkörper kompensierbar sind. Die Neuanordnung der bei diesem Auswuchtvorgang verwendeten Massen ist während des Bearbeitungsvorganges jederzeit möglich und kann besonders zweckmäßig automatisch auf Grundlage von Sensordaten durch eine Regelung oder eine Steuerung erfolgen. Sind formschlüssige Buchsen eines Stangenlademagazins in drehbar gelagerten Hülsen untergebracht, können die Massenkörper an diesen befestigt sein, so dass sich bei Rotation der Materialstangen sowohl Buchsen, Hülsen, als auch die daran befestigten Massenkörper grundsätzlich mit derselben Winkelgeschwindigkeit drehen. Die Massenkörper befinden sich bevorzugt auf einer Kreisbahn, die senkrecht zur Drehachse angeordnet ist. In ihrer erstmaligen Positionierung oder auch Grundstellung sind die verschiedenen Massenkörper zweckmäßig so angeordnet, dass sich diese Schwingungsneutral verhalten, also selbst keine Unwucht erzeugen. Nachdem die Rotation der Materialstange eingesetzt hat, erzeugt diese gegebenenfalls eine unerwünschte Unwucht, welche von der Sensorik wahrgenommen wird. Die Regelung oder Steuerung sorgt sodann für die Einstellung bzw. Neupositionierung der Massenkörper, so dass diese durch ihre eigene Unwucht der Unwucht der Materialstange entgegenwirken, bevorzugt diese auch ausgleichen. Damit reduzieren sich die Schwingungen auf ein erwünschtes Minimum, so dass auch höhere Drehzahlen und somit eine wirtschaftlichere Bearbeitung der Materialstangen möglich wird. Begrenzt wird die Kapazität der erfindungsgemäßen Auswuchtvorrichtung lediglich durch den für die Massenkörper zur Verfügung gestellten möglichen Positionierungsbereich, insbesondere -raum, sowie durch die Form, Masse und/oder Lage der Massenkörper zum Rotations-Mittelpunkt. So kann eine Einschränkung darin bestehen, dass die Massenkörper konstruktionsbedingt gegebenenfalls nicht um 360 Grad auf einer solchen Kreisbahn verschiebbar sind. Vorzugsweise sind im Falle von Buchsen in Bezug auf jede dieser Buchsen wenigstens zwei Massenkörper auf insgesamt zwei Kreisbahnen angeordnet, da sich in der Regel jede Unwucht über zwei vollständige Kreise ausgleichen lässt, wenn auch anwendungsspezifisch nicht die komplette Unwucht der Massenkörper hierbei genutzt werden kann. Die genaue Positionierung der Massenkörper, insbesondere bei hydraulischer oder pneumatischer Verstellung unterliegt den Grenzen von herstellungsbedingten Ungenauigkeiten, Materialreibung und der Fliehkraft innerhalb eines rotierenden Systems. Somit ist die Feinjustierung der Massenkörper nur in entsprechend gefassten Grenzen möglich.

Anstelle der zuvor beschriebenen Ausführungsformen unter Verwendung von Buchsen zur Kraftübertragung auf eine Materialstange, ist es jedoch auch möglich, anderweitig eine form- und/kraftschlüssige Verbindung zwischen den Massenkörpern und einer zur Rotation der Materialstange eingesetzten Führungseinrichtung und/oder der Materialstange selbst herzustellen, so dass bei Rotation einer eingeführten Materialstange ein oder mehrere Massenkörper zusammen mit der Materialstange mit derselben Winkelgeschwindigkeit um die Drehachse rotieren. Dies kann zum Beispiel durch entsprechende Spannmittel erfolgen, die entweder vorgespannt werden oder durch Aufbringen einer Spannkraft die Materialstange fixieren. Dabei können die Massenkörper derart beweglich gelagert sein, dass diese zum Beispiel durch eine Vorschubbewegung der Materialstange axial mit verschoben werden. Somit ist der Einsatz von Buchsen nicht zwingend notwendig. Vielmehr ist der Einsatz einer dynamischen Auswuchtung mittels dynamisch und individuell positionierbaren Massenkörpern im Rahmen der Erfindung auch in einem Stangenlademagazin mit durchgängigen oder in Segmenten aufgebauten Führungskanal möglich.

### Bezugszeichenliste

- 1: Materialstange
- 2: Spindel des Drehautomaten
- 3: Spannmittel
- 4: Überstand
- 5: Gestell
- 6: Stangenlademagazin
- 7: Haube
- 8: Regelungs- oder Steuerungseinheit
- 9: Aktorversorgungseinheit
- 10: Auswuchtvorrichtung
- 11: Führungseinrichtung
- 12: Buchse einer Führungseinrichtung
- 13a, 13b: Trägereinrichtung
- 14a, 14b: Massenkörper
- 15: Aufnahmeraum für Buchse
- 16, 16a, 16b: Positionierungsbereich für Massenkörper
- 17: Sensorik
- 18: Aktoren zur Positionierung
- z: z-Achse
- z': Drehachse
- Δz: Versatz zwischen z-Achse und Drehachse
- αa, αb, αa', αb': Winkellagen

## Patentansprüche

1. Auswuchtvorrichtung zur Integration in ein Stangenlademagazin zum Führen von Materialstangen (1) an einem Drehautomaten, wobei durch die Längsachse einer in einem Stangenlademagazin geführten Materialstange (1) eine z-Achse (z) definiert ist, mit wenigstens einer zur Aufnahme einer Materialstange (2) ausgeformten Führungseinrichtung (11, 12), in welche die Materialstange (1) entlang der z-Achse (z) einzuführen ist und welche einer eingeführten und zur Bearbeitung an den Drehautomaten beförderten Materialstange eine Rotation ermöglicht, und wobei die Führungseinrichtung (11, 12) ausgebildet ist, dass eine solche Rotation der eingeführten Materialstange entweder um eine koaxial oder um eine versetzt zur z-Achse (z) angeordnete Drehachse (z') erfolgt,
- wenigstens einen in Bezug auf die Führungseinrichtung (11, 12) wiederholt positionierbaren Massenkörper (14a, 14b), der nach jeweils erfolgter Positionierung form- und/oder kraftschlüssig mit der Führungseinrichtung (11, 12) und/oder der Materialstange (1) in Verbindung steht, so dass dieser daraufhin bei Rotation einer eingeführten Materialstange (1) zusammen mit der Materialstange (1) mit derselben Winkelgeschwindigkeit um die Drehachse (z') rotiert, **dadurch gekennzeichnet, dass**
- wenigstens eine Positioniereinrichtung (8, 9, 13, 17, 18) die ausgebildet ist, den wenigstens einen Massekörper (14a, 14b) in Bezug auf die Führungseinrichtung (11, 12) erstmalig zu positionieren, während der Rotation eine erforderliche, durch Unwucht bedingte Neupositionierung zu erkennen und den Massenkörper (14a, 14b) unter Ansprechen auf eine als erforderlich erkannte Neupositionierung in Bezug auf die Führungseinrichtung (11, 12) jeweils wieder neu zu positionieren,

2. Auswuchtvorrichtung nach Anspruch 1, ferner **dadurch gekennzeichnet, dass** die Positioniereinrichtung ausgebildet ist, den Massenkörper in Bezug auf die Führungseinrichtung zwischen einem Nachschieben zur weiteren Beförderung einer eingeführten Materialstange und dem Beginn einer erneuten Rotation der Materialstange neu zu positionieren.

3. Auswuchtvorrichtung nach Anspruch 1, oder 2, ferner
**dadurch gekennzeichnet, dass** die Positioniereinrichtung ausgebildet ist, den Massenkörper in Bezug auf die Führungseinrichtung während der Rotation der eingeführten Materialstange neu zu positionieren.

4. Auswuchtvorrichtung nach einem der vorstehenden Ansprüche, ferner **gekennzeichnet durch** eine Sensorik zur Erfassung einer Unwucht, insbesondere zur Erfassung der Intensität von durch Unwucht verursachten Schwingungen.

5. Auswuchtvorrichtung nach einem der vorstehenden Ansprüche, ferner **dadurch gekennzeichnet, dass** die form- und/oder kraftschlüssige Verbindung mit der Führungseinrichtung und/oder der Materialstange (2) mechanisch, pneumatisch und/oder hydraulisch erfolgt.

6. Auswuchtvorrichtung nach einem der vorstehenden Ansprüche, ferner **dadurch gekennzeichnet, dass** die Führungseinrichtung wenigstens eine um die Drehachse rotierbar gelagerte Buchse umfasst, in welche die Materialstange entlang der z-Achse einzuführen ist.

7. Auswuchtvorrichtung nach einem der vorstehenden Ansprüche, ferner **dadurch gekennzeichnet, dass** die Führungseinrichtung einen durchgängigen oder aus Segmenten bestehenden Führungskanal umfasst, in welchem der Materialstange eine Rotation um die Drehachse ermöglicht ist.

8. Stangenlademagazin zum Führen von Materialstangen an einem Drehautomaten, wobei durch die Längsachse einer in dem Stangenlademagazin geführten Materialstange eine z-Achse definiert ist, **dadurch gekennzeichnet, dass** wenigstens eine Auswuchtvorrichtung nach einem der vorstehenden Ansprüche integriert ist.

9. Verfahren zum Auswuchten von durch Rotation einer Materialstange erzeugter Unwucht, die in einem Stangenlademagazin zum Führen von Materialstangen an einem Drehautomaten, geführt wird,
mit folgenden Schritten:
- die Materialstange (1) wird entlang einer z-Achse (z), welche durch die Längsachse der Materialstange definiert wird, in wenigstens eine zur Aufnahme einer Materialstange (1) ausgeformte Führungseinrichtung (11, 12) eingeführt, die einer eingeführten und zur Bearbeitung an den Drehautomaten beförderten Materialstange eine Rotation um eine Drehachse (z') ermöglicht, die entweder koaxial oder versetzt zur z-Achse (z) ist,
- wenigstens ein Massenkörper (14a, 14b) wird in Bezug auf die Führungseinrichtung (11, 12) positioniert, und nach erfolgter Positionierung form- und/oder kraftschlüssig mit der Führungseinrichtung (11, 12) und/oder der Materialstange (1) in Verbindung gebracht, so dass dieser daraufhin bei Rotation der eingeführten Materialstange (1) zusammen, mit der Materialstange (1) mit derselben Winkelgeschwindigkeit um die Drehachse (z') rotiert, **dadurch gekennzeichnet, dass**
- unter Ansprechen auf eine während der Rotation einer eingeführten Materialstangen (1) als erforderlich erkannte, durch Unwucht bedingte Neupositionierung, insbesondere bei Überschreiten eines diesbezüglich vordefinierten Grenzwertes, wird der Massenkörper (14a, 14b) jeweils wieder neu positioniert.

## Claims

1. Balancing device for integration in a bar loading magazine for guiding material bars (1) on a turning machine, wherein a z axis (z) is defined by the longitudinal axis of a material bar (1) guided in a bar loading magazine, comprising at least one guiding unit (11, 12) formed to receive a material bar (2), into which guiding unit the material bar (1) is to be introduced along the z axis (z) and which allows a material bar introduced and conveyed for machining on the turning machine to rotate, and wherein the guiding unit (11, 12) is designed in such a way that such a rotation of the introduced material bar is carried out about a rotary axis (z') which extends either coaxially to or offset from the z axis (z),
- at least one mass body (14a, 14b) which can be repeatedly positioned in relation to the guiding unit (11, 12), which mass body, each time it has been positioned, is connected to the guiding unit (11, 12) and/or the material bar (1) in a form-fitting and/or force-fitting manner, so that it then rotates, during rotation of an introduced material bar (1), together with the material bar (1) at the same angular speed about the rotary axis (z'), **characterised in that**
- at least one positioning unit (8, 9, 13, 17, 18) which is designed to position, for the first time, the at least one mass body (14a, 14b) in relation to the guiding unit (11, 12), to detect during the rotation any repositioning necessary because of an imbalance, and to reposition the mass body (14a, 14b) in each case in response to a repositioning, detected as being required, in relation to the guiding unit (11, 12).

2. Balancing device as claimed in claim 1, further **characterised in that** the positioning unit is designed to reposition the mass body in relation to the guiding unit between a pushing-on motion for the further conveyance of an introduced material bar and the beginning of a new rotation of the material bar.

3. Balancing device as claimed in claim 1 or 2, further **characterised in that** the positioning unit is designed to reposition the mass body in relation to the guiding unit during the rotation of the introduced material bar.

4. Balancing device as claimed in any one of the preceding claims, further **characterised by** sensors for detecting an imbalance, in particular for detecting the intensity of vibrations caused by an imbalance.

5. Balancing device as claimed in any one of the preceding claims, further **characterised in that** the form-fitting and/or force-fitting connection to the guiding unit and/or the material bar (2) is carried out mechanically, pneumatically and/or hydraulically.

6. Balancing device as claimed in any one of the preceding claims, further **characterised in that** the guiding unit comprises at least one bush supported for being rotatable about the rotary axis, into which the material bar is to be introduced along the z axis.

7. Balancing device as claimed in any one of the preceding claims, further **characterised in that** the guiding unit comprises a guiding channel which is continuous or consists of segments and in which the material bar can rotate about the rotary axis.

8. Bar loading magazine for guiding material bars on a turning machine, wherein a z axis is defined by the longitudinal axis of a material bar guided in the bar loading magazine, **characterised in that** at least one balancing device as claimed in any one of the preceding claims is integrated.

9. Method for balancing an imbalance generated by the rotation of a material bar which is guided in a bar loading magazine for guiding material bars on a turning machine, comprising the following steps:
- the material bar (1) is introduced along a z axis (z), which is defined by the longitudinal axis of the material bar, into at least one guiding unit (11, 12) formed to receive a material bar (1), which guiding unit allows a material bar introduced and conveyed for machining on the turning machine to rotate about a rotary axis (z') which is either coaxial to or offset from the z axis (z),
- at least one mass body (14a, 14b) is positioned in relation to the guiding unit (11, 12) and, after it has been positioned, is connected to the guiding unit (11, 12) and/or the material bar (1) in a form-fitting or force-fitting manner, so that it then rotates, during the rotation of the introduced material bar (1), together with the material bar (1) at the same angular speed about the rotary axis (z'), **characterised in that**
- the mass body (14a, 14b) is in each case repositioned in response to a repositioning, detected as being required during the rotation of an introduced material bar (1) and caused by an imbalance, in particular in the case of a limit value predefined in this respect being exceeded.

## Revendications

1. Dispositif d'équilibrage destiné à être intégré dans un magasin de chargement de barres pour l'avancée de barres de matériau (1) sur un tour automatique, dans lequel un axe z (z) est défini par l'axe longitudinal d'une barre de matériau (1) guidée dans un magasin de chargement de barres, comprenant :
- au moins un dispositif de guidage (11, 12) formé pour recevoir une barre de matériau (2), dans lequel la barre de matériau (1) est à introduire le long de l'axe z (z) et qui permet une rotation d'une barre de matériau introduite et transportée pour usinage sur le tour automatique, et le dispositif de guidage (11, 12) étant réalisé pour qu'une telle rotation de la barre de matériau introduite ait lieu autour d'un axe de rotation (z') coaxial à l'axe z (z) ou décalé par rapport à celui-ci,
- au moins un corps de masse (14a, 14b) positionnable de manière répétée relativement au dispositif de guidage (11, 12), lequel est, après positionnement respectif, raccordé par engagement positif et/ou par force au dispositif de guidage (11, 12) et/ou à la barre de matériau (1), de manière à tourner ensuite avec une barre de matériau (1) lors de la rotation de ladite barre de matériau (1), à la même vitesse angulaire autour de l'axe de rotation (z'), **caractérisé en ce que** :
- au moins un dispositif de positionnement (8, 9, 13, 17, 18) est prévu pour positionner une première fois ledit au moins un corps de masse (14a, 14b) relativement au dispositif de guidage (11, 12), identifier un repositionnement nécessaire suite à un déséquilibre pendant la rotation, et pour repositionner le corps de masse (14a, 14b) relativement au dispositif de guidage (11, 12) en réaction à un repositionnement respectif identifié comme nécessaire.

2. Dispositif d'équilibrage selon la revendication 1, **caractérisé en outre en ce que** le dispositif de positionnement est réalisé pour positionner le corps de masse relativement au dispositif de guidage entre une poussée pour la poursuite du transport d'une barre de matériau introduite et le début d'une nouvelle rotation de la barre de matériau.

3. Dispositif d'équilibrage selon la revendication 1 ou 2, **caractérisé en outre en ce que** le dispositif de positionnement est réalisé pour repositionner le corps de masse relativement au dispositif de guidage pendant la rotation de la barre de matériau introduite.

4. Dispositif d'équilibrage selon l'une des revendications précédentes, **caractérisé en outre par** un système de capteurs pour la détection d'un déséquilibre, en particulier pour la détection de l'intensité des vibrations provoquées par le déséquilibre.

5. Dispositif d'équilibrage selon l'une des revendications précédentes, **caractérisé en outre en ce que** le raccordement par engagement positif et/ou par force au dispositif de guidage et/ou à la barre de matériau (2) est effectué mécaniquement, pneumatiquement et/ou hydrauliquement.

6. Dispositif d'équilibrage selon l'une des revendications précédentes, **caractérisé en outre en ce que** le dispositif de guidage comprend au moins une douille montée de manière rotative autour de l'axe de rotation, dans laquelle doit être introduite la barre de matériau le long de l'axe z.

7. Dispositif d'équilibrage selon l'une des revendications précédentes, **caractérisé en outre en ce que** le dispositif de guidage comprend un canal de guidage continu ou formé de segments, dans lequel est permise une rotation de la barre de matériau autour de l'axe de rotation.

8. Magasin de chargement de barres pour le guidage de barres de matériau sur un tour automatique, dans lequel un axe z est défini par l'axe longitudinal d'une barre de matériau guidée dans le magasin de chargement de barres, **caractérisé en ce qu'**au moins un dispositif d'équilibrage selon l'une des revendications précédentes est intégré.

9. Procédé de réduction d'un déséquilibre généré par la rotation d'une barre de matériau guidée dans un magasin de chargement de barres pour le guidage de barres de matériau sur un tour automatique, comprenant les étapes suivantes :
- la barre de matériau (1) est introduite le long d'un axe z (z) défini par l'axe longitudinal de la barre de matériau dans au moins un dispositif de guidage (11, 12) formé pour la réception d'une barre de matériau (1) et permettant une rotation d'une barre de matériau introduite et transportée pour usinage sur le tour automatique, autour d'un axe de rotation (z') coaxial à l'axe z (z) ou décalé par rapport à celui-ci,
- au moins un corps de masse (14a, 14b) est positionné relativement au dispositif de guidage (11, 12), et est, après positionnement, raccordé par engagement positif et/ou par force au dispositif de guidage (11, 12) et/ou à la barre de matériau (1), de manière à tourner ensuite avec une barre de matériau (1) lors de la rotation de ladite barre de matériau (1), à la même vitesse angulaire autour de l'axe de rotation (z').
**caractérisé en ce que** :
- le corps de masse (14a, 14b) est repositionné en réaction à un repositionnement respectif identifié comme nécessaire suite à un déséquilibre pendant la rotation d'une barre de matériau (1) introduite, en particulier en cas de dépassement d'une valeur limite correspondante prédéfinie.
